# DEMANDE DE BREVET EUROPEEN

(11) **EP 0 618 699 A1**
(43) Date de publication de la demande: **05.10.1994**
(21) Numéro de dépôt: 94400659.2
(22) Date de dépôt: 28.03.1994
(51) Int. Cl.: H04L 7/00

(54) **Dispositif de sauvegarde pour agencement requérant la présence d'un signal périodique**

(30) Priorité: 31.03.1993 FR 9303774
(71) Demandeur: ALCATEL BUSINESS SYSTEMS, F-75008 Paris (FR)
(72) Inventeur: Clauss, Dominique, F-67300 Schiltigheim (FR); Schneider, Philippe, F-67540 Ostwald (FR)
(74) Mandataire: Schaub, Bernard

(57) **Abrégé**

Dispositif de sauvegarde, pour agencement d'organes (3, 4) dont le fonctionnement implique la présence d'au moins un signal binaire de période déterminée (HP) et dont éventuellement la sécurité est liée à la présence d'un tel signal, comportant des moyens d'aiguillage (10) pour diriger, vers l'agencement, soit ce signal lorsque et tant que ce premier signal est détecté par des moyens de détermination (11), soit un signal périodique (HS) correspondant, dit de sauvegarde.

Les moyens de détermination sont composés d'un circuit, élémentaire, de logique binaire (13) agissant sur les moyens d'aiguillage sous l'action d'un circuit, élémentaire, de comptage binaire (12) vérifiant la présence du premier signal à un rythme d'un signal d'échantillonnage (HE) à partir duquel le signal de sauvegarde est obtenu par division.

## Description

L'invention concerne un dispositif de sauvegarde pour agencement dont le fonctionnement implique la présence d'au moins un signal périodique déterminé et dont éventuellement la sécurité est liée à la permanence d'un tel signal.

L'exploitation d'un certain nombre d'agencements, notamment de communication, implique la présence permanente d'un signal périodique déterminé, par exemple d'un signal d'horloge pour leur pilotage ou leur asservissement.

L'absence, ou la disparition, d'un tel signal périodique indispensable, lorsque le reste de l'agencement est en état de fonctionnement, peut ne pas être admissible, lorsque le fonctionnement doit être assuré autant que possible, ou que l'absence de signal risque de conduire à des dommages matériels. Un vieillissement accéléré d'organes d'un agencement et/ou la destruction d'une source d'énergie qui les alimente, peuvent ainsi être occasionnés par une surconsommation électrique, lorsqu'un signal périodique qui est normalement fourni à cet agencement est absent.

Pour limiter les effets d'une absence d'un signal périodique déterminé qui est fourni à un agencement, il est bien entendu possible de dupliquer les moyens de transmission d'un signal périodique, les sources et/ou les organes qui les reçoivent pour réduire au maximum les risques d'interruption, toutefois de telles duplications ont un coût qui, commercialement, n'est pas toujours acceptable pour un agencement donné. Il est aussi connu de générer un second signal périodique susceptible d'être substitué à un premier signal périodique défaillant sans perturbation des organes desservis en mettant en oeuvre un système d'horloge de secours verrouillé en phase sur le premier signal par un dispositif à boucle de phase. Toutefois le coût d'un tel dispostif est relativement élevé et il peut donc être commercialement inacceptable.

Un autre type de solution connue consiste à assurer une surveillance logicielle de la présence d'un signal périodique indispensable afin de mettre, en cas de besoin, le ou les organes menacés dans un état d'attente où ils ne risquent pas d'être endommagés. Cette surveillance logicielle a toutefois des conséquences sur le plan du matériel et elle implique généralement la mise en place d'entrées spécifiques de commande au niveau des organes concernés. Ceci se traduit notamment par la mise en place de broches de connexion spécifiques dans le cas d'organes constitués sous forme de composants électroniques intégrés. Les agencements et/ou organes doivent alors avoir été initialement prévus à cet effet. Il s'agit donc là encore d'une solution dont le coût est susceptible de restreindre la mise en oeuvre.

Aussi des solutions beaucoup moins onéreuses ont déjà été recherchées. Il est par exemple connu de prévoir des moyens de limitation de courant pour éviter une éventuelle surconsommation due à l'absence du signal d'horloge, lorsque c'est essentiellement l'élimination des risques matériels susceptibles d'être occasionnés par une absence de signal qui est prise en compte. Il est aussi prévu de mesurer la consommation électrique d'au moins un des organes d'un agencement afin de déclencher une interruption de l'alimentation du ou des organes menacés de cet agencement, lorsque cette consommation traduit une absence du signal périodique considéré indispensable. Une telle interruption est classiquement assurée par un relais de sécurité et il est habituellement prévu une intervention extérieure, pour assurer le réenclenchement du relais et pour permettre la remise en marche de l'agencement. Cette solution n'est pas non plus vraiment satisfaisante et l'invention vise donc à solutionner le problème posé de manière simple et à faible coût.

Elle propose donc un dispositif de sauvegarde, pour agencement d'organes dont le fonctionnement implique la présence d'au moins un signal périodique déterminé, de type binaire, et dont éventuellement la sécurité est liée à la présence d'un tel signal, le dispositif comportant des moyens d'aiguillage pour diriger, vers l'agencement, soit ce signal, dit premier, lorsque et tant que ce premier signal est détecté par des moyens de détermination, soit un signal périodique correspondant, dit de sauvegarde.

Selon une caractéristique de l'invention, les moyens de déterminationde ce dispositif sont composés d'un circuit, élémentaire, de logique binaire agissant sur les moyens d'aiguillage sous l'action d'un circuit, élémentaire, de comptage binaire vérifiant la présence du premier signal à un rythme d'échantillonage à partir duquel le signal de sauvegarde est obtenu par division.

Selon une autre caractéristique de l'invention, le dispositif de sauvegarde est muni de moyens de détermination comportant un compteur binaire, de capacité d'au moins trois bits, dont l'entrée d'horloge reçoit le signal d'échantillonnage et dont l'entrée de comptage reçoit le premier signal dont la présence est a détecter, ainsi qu'un décodeur logique connecté aux sorties du compteur binaire.

Selon une caractéristique d'une variante de l'invention, le dispositif de sauvegarde est muni de moyens de détermination comportant une bascule recevant le premier signal sur une entrée d'horloge et le signal de sauvegarde simultanément sur une entrée de données et sur une entrée de mise à un, ainsi qu'un diviseur produisant le signal de sauvegarde à partir du signal d'échantillonnage et recevant par ailleurs, sur une entrée de remise à zéro, un signal, de type binaire, produit par un générateur d'impulsions à partir des transitions du premier signal.

L'invention et ses avantages sont précisés dans la description qui suit en liaison avec les figures évoquées ci-dessous.

La figure 1 présente un premier exemple d'un dispositif de protection selon l'invention.

La figure 2 présente un second exemple d'un dispositif de protection selon l'invention.

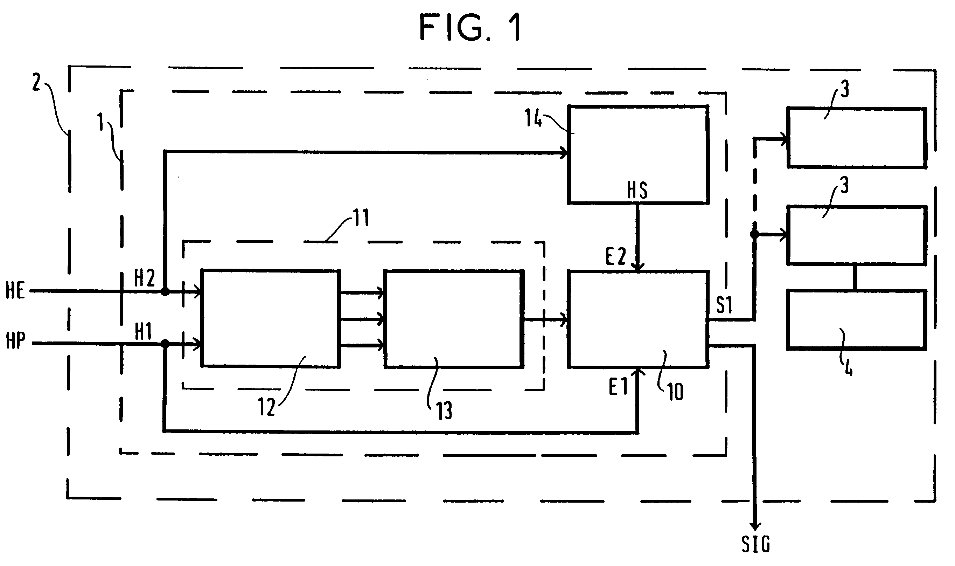

Le dispositif de sauvegarde 1 montré sur la figure 1 est destiné à être associé à un agencement 2 dont le fonctionnement implique la présence pratiquement permanente d'un signal périodique déterminé, de type binaire. Ce signal périodique déterminé, ici référencé HP, est par exemple un signal d'horloge qui est produit dans l'agencement 2 lui-même ou transmis à cet agencement à partir d'une horloge externe non représentée.

L'agencement 2 est supposé comporter au moins un organe 3 qui ne fonctionne que s'il reçoit le signal HP et qui est susceptible d'être endommagé ou éventuellement d'entraîner des dommages au niveau d'un autre organe, tel l'organe 4, auquel il est associé, s'il ne reçoit pas de signal, tel que HP.

Or étant supposé que, par hypothèse, le signal HP est indispensable au bon fonctionnement de l'agencement 2 et qu'il n'est pas prévu de duplication de ce signal, il est toutefois envisageable de fournir à l'agencement un autre signal périodique qui soit suffisant pour éviter les risques d'endommagement dus à une absence totale du signal périodique attendu, même s'il ne permet pas à l'agencement de fonctionner vraiment.

Le dispositif de sauvegarde selon l'invention comporte donc des moyens d'aiguillage, par exemple un multiplexeur 10 dont une sortie S1 est reliée aux entrées des organes 3 de l'agencement 2 qui sont destinées à recevoir le signal HP nécessaire au fonctionnement de cet agencement. Une première entrée E1 du multiplexeur 10 reçoit le signal HP, une seconde entrée E2 du multiplexeur 10 reçoit un signal de sauvegarde HS choisi pour être partiellement substituable au signal HP.

Les caractéristiques du signal binaire de sauvegarde HS sont ici prévues pour qu'il ne soit pas confondu avec le signal binaire HP sur le plan du fonctionnement normal par les organes 3 auxquels ce signal est transmis par le multiplexeur 10, de manière à ne pas permettre le fonctionnement de l'agencement 2 sur la base d'un signal substitué, non prévu à cet effet.

La compatibilité des caractéristiques entre signal HP et signal de sauvegarde HS est par contre choisie de manière à permettre un fonctionnement de sauvegarde des organes 3 qui soit suffisant pour éliminer tout risque direct ou indirect de détérioration d'organe(s) 3 ou 4, si le signal HS est substitué au signal HP.

Dans un exemple de réalisation, le signal HP est par exemple un signal binaire dont la fréquence est de 4,096 Mhz, alors que le signal HS est un signal dont la fréquence est de 5 Mhz.

La mise en communication sélective de l'une ou l'autre des entrées E1 et E2 du multiplexeur 10 avec la sortie S est commandée par des moyens de détermination de présence chargés de surveiller le signal HP.

Les moyens de détermination agissent ici par échantillonnage et mettent en oeuvre un élémentaire compteur 12, de type binaire, associé à un décodeur logique élémentaire 13. Le compteur 12 comporte une entrée de comptage H1 destinée à recevoir le signal HP, lorsqu'il est présent, une entrée d'horloge H2 reçoit un signal d'échantillonnage HE indépendant du signal HP. Ce signal indépendant HE peut être obtenu de différentes manières, soit, notamment, à partir d'un signal périodique permanent présent dans l'agencement 2 indépendamment du signal HP, soit encore au moyen d'une horloge spécialement prévue à cet effet, par exemple localement dans l'agencement 2.

Dans l'exemple de réalisation envisagé, le compteur 12 a une capacité de trois bits au moins pour permettre de minimiser les risques d'erreur de comptage et d'interprétation. La fréquence du signal HE est choisie de manière connue en soi par rapport à celle du signal HP pour permettre un échantillonnage correct de ce signal HP, elle est par exemple trois fois supérieure à celle de ce signal.

Le décodeur 13 est ici relié en sortie de chacun des étages de comptage du compteur 12 et il produit un signal de commande de changement d'entrée à destination du multiplexeur 10, lorsque l'échantillonnage du signal HP par le signal HE se traduit par la présence d'un même niveau binaire zéro en sortie de tous les étages de comptage du compteur 12. Cet état caractéristique de l'absence du signal HP déclenche en conséquence l'aiguillage du signal de sauvegarde HS par le multiplexeur 10 vers les organes 3 de l'agencement 2.

Dans la réalisation proposée, le signal de sauvegarde HS, est obtenu par division du signal d'échantillonnage HE qui est donc nécessairement un signal périodique permanent obtenu indépendamment du signal HP dans les conditions exposées plus haut pour le signal HS. Un diviseur 14 est donc relié par son entrée à l'entrée H2 du compteur 12, pour recevoir le signal HE de même que cette entrée, et par sa sortie à l'entrée E2 du multiplexeur 10 auquel il fournit le signal HS.

Une information de présence/absence du signal HP est susceptible d'être obtenue de l'agencement selon l'invention, par exemple au niveau du décodeur 11 ou en sortie du multiplexeur 10, alors doté d'une sortie spécifique ici référencée SIG. Cette information qui peut être exploitée pour alerter le personnel d'exploitation de l'agencement 1 est également susceptible d'être exploitée par l'agencement par exemple pour empêcher le fonctionnement d'au moins certains organes en l'absence du signal HP.

La solution selon l'invention permet d'éviter toute surconsommation de l'agencement en cas de perte du signal HP puisque ce signal est automatiquement remplacé par un signal HS dont l'effet peut être prévu pour qu'il soit équivalent sur le plan de la consommation d'énergie.

Elle tend donc à augmenter la fiabilité de l'ensemble, dans la mesure où elle élimine des risques de consommation excessive d'énergie et donc d'échauffement. Elle permet aussi un contrôle systématique du fonctionnement de l'horloge à la mise sous-tension et une substitution automatique du signal HP au signal HS, après absence du premier nommé et dès réapparition de celui-ci.

Bien entendu, il est possible d'appliquer l'invention au cas d'agencements exigeant la présence permanente simultanée ou éventuellement successive de plusieurs signaux périodiques déterminés, l'agencement comportant alors une association ou une combinaison logique simple d'unités basées sur l'agencement élémentaire schématisé sur la figure unique.

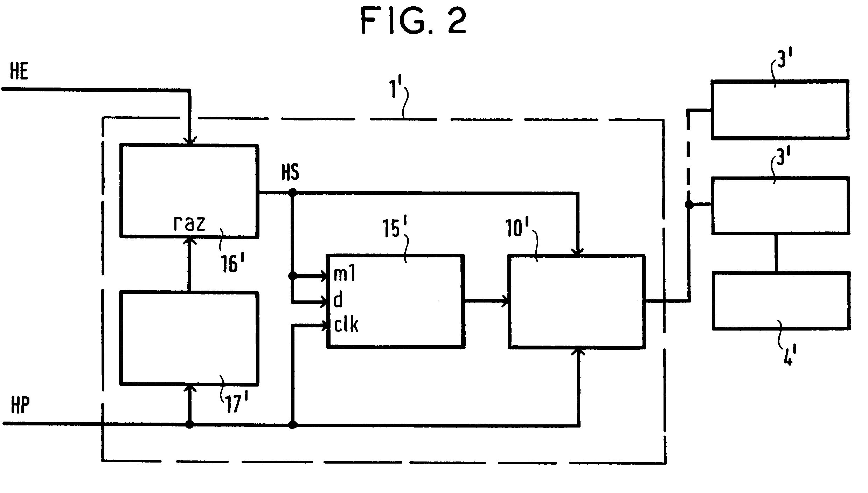

Le dispositif de sauvegarde 1' montré sur la figure 2 est lui aussi destiné à être associé à un agencement 2 dont le fonctionnement implique la présence pratiquement permanente d'un signal périodique déterminé, lorsque ce signal périodique fourni par une première source et ici dit premier peut être remplacé par un second signal périodique produit par une autre source de même fréquence que la première. Dans un tel cas il n'y a pas de risque d'endommagement d'organes susceptibles d'être la conséquence d'une absence de signaux en provenance de la première source, tant que la seconde source est apte à se substituer à cette première source.

Par contre, sans précautions particulières, des signaux signaux transitoires parasites liés au déphasage entre les signaux périodiques produits par les deux sources concernées sont susceptibles de se produire et de nuire au bon fonctionnement d'un agencement, lors des éventuelles commutations d'un signal périodique à l'autre.

Selon l'invention il est donc prévu de déterminer si le premier signal périodique est présent au niveau même des points d'utilisation où son absence peut être critique dans un agencement, de manière à lui substituer un signal de sauvegarde de même fréquence par l'intermédiaire d'un dispositif de sauvegarde élémentaire, en évitant la création de signaux transitoires parasites au moment des commutations.

De même que dans le cas de la figure 1, le dispositif de sauvegarde 1' présenté en figure 2 est montré associé à un agencement 2' comportant des organes 3', 4' requérant la présence permanente d'un signal périodique déterminé, de type binaire, normalement fourni par une source générant un signal ici dit premier signal et référencé HP comme précédemment, ou alternativement par une autre source sous la forme d'un signal, dit de sauvegarde et référencé HS, correspondant au signal HP auquel il est apte à se substituer.

Le signal HP est ici supposé obtenu par division d'un signal d'échantillonnage HE, de type binaire, qui est par exemple fourni par un simple oscillateur et qui est exploité pour vérifier la présence du signal HP et qui a donc préférablement une fréquence multiple de celle qui est commune aux signaux HP et HS.

Dans l'exemple proposé en figure 2, le signal de sauvegarde HS est obtenu en sortie d'un diviseur 16' recevant le signal d'échantillonnage HE, il est appliqué à l'une des deux entrées de signaux à commuter d'un multiplexeur 10' qui reçoit parallèlement le signal HP sur la seconde de ces entrées.

Le multiplexeur 10' est commandé par une bascule 15', de type D, à une sortie de laquelle il est relié, cette bascule ayant une entrée d'horloge "clk" recevant le signal HP. La bascule 15' reçoit aussi le signal de sauvegarde HS en simultané par une entrée de mise à l'état binaire un, ici référencée "m1" et par une entrée de donnée "D".

Le diviseur 16' qui reçoit le signal d'échantillonnage HE, reçoit aussi, sur une entrée de remise à zéro "raz", un signal, de type binaire, produit par un générateur d'impulsions 17' à chacune des transitions du signal HP et par conséquent à un rythme double de celui de ce dernier.

En conséquence, le diviseur 16' ne fournit pas de signal de sauvegarde HS, à partir du signal HE, tant que le signal HP est présent, puisqu'il reçoit une commande de mise de sa sortie au niveau binaire zéro à chaque transition du signal HP et donc à un rythme double de celui commun à ce signal HP et au signal HS, lorsque ces signaux sont respectivement produits.

Par contre en cas d'absence du signal HP, le diviseur 16' n'est pas remis à zéro et il produit le signal de sauvegarde HS, avec un délai compris entre une demie et une période de signal, après la dernière impulsion du signal HP. La première impulsion de signal HS alors produite force la mise à un de la sortie de la bascule 15' précédemment à l'état zéro et commande en conséquence le multiplexeur 10' qui aiguille alors le signal HS vers les organes 3' en remplacement du signal HP. La variation potentielle du laps de temps entre deux transitions en sortie de multiplexeur 15', lors de la commutation du signal HP au signal HS, est donc contenue entre deux limites bien définies qui sont directement liées au délai précisé ci-dessus.

Lors de la réapparition du signal HP, la sortie du diviseur 16' est remise à zéro dès la première impulsion produite par le générateur 17' à partir du premier front de signal HP qui apparait.

La sortie de la bascule 15' force à zéro l'entrée de commande du multiplexeur 10', lorsque le signal de sauvegarde HS est passé du niveau binaire un à un niveau binaire zéro et que ce niveau zéro est recopié de l'entrée "d" de la bascule sur la sortie de cette bascule, sous l'action du signal HP sur l'entrée d'horloge "clk".

La variation potentielle du laps de temps entre deux transitions en sortie du multiplexeur 15', lors de la commutation du signal HS au signal HP, est là encore contenue entre deux limites bien définies, dans la mesure où le délai de déclenchement à prendre en compte est compris entre une demie et une période de même que précédemment.

De telles variations de durée entre transitions lors des éventuelles commutations sont suffisamment courtes pour pouvoir être acceptées par de nombreux organes d'agencement.

Il est à noter que le dispositif de sauvegarde tel que décrit en liaison avec la figure 2 qui n'exige que quelques composants élémentaires pour sa réalisation permet bien entendu d'éviter qu'une perte de signal d'horloge se traduise par une consommation accrue et éventuellement dangereuse des organes auxquels ce signal est fourni.

Il est à noter aussi que tant ce dispositif que celui décrit en liaison avec la figure 1 peuvent permettre une surveillance systématique et une commutation automatique d'horloge dès mise sous-tension de l'agencement qu'ils desservent, sans intervention extérieure.

## Revendications

**1/** Dispositif de sauvegarde, pour agencement d'organes (3, 4 ou 3', 4') dont le fonctionnement implique la présence d'au moins un signal périodique déterminé, de type binaire, (HP) et dont éventuellement la sécurité est liée à la présence d'un tel signal, comportant des moyens d'aiguillage (10 ou 10') pour diriger, vers l'agencement, soit ce signal, reçu et dit premier, lorsque et tant que ce premier signal est détecté par des moyens de détermination (11 ou 11'), soit un signal périodique (HS) correspondant, dit de sauvegarde, caractérisé en ce que les moyens de détermination sont composés d'un circuit, élémentaire, de logique binaire (13 ou 15') agissant sur les moyens d'aiguillage sous l'action d'un circuit, élémentaire, de comptage binaire (12 ou 16') vérifiant la présence du premier signal à un rythme d'un signal d'échantillonnage (HE) à partir duquel le signal de sauvegarde est obtenu par division.

**2/** Dispositif de sauvegarde, selon la revendication 1, caractérisé en ce qu'il est muni de moyens de détermination comportant un compteur binaire (12), de capacité d'au moins trois bits, dont l'entrée d'horloge reçoit le signal d'échantillonnage et dont l'entrée de comptage reçoit le premier signal dont la présence est a détecter, ainsi qu'un décodeur logique (13) connecté aux sorties du compteur binaire.

**3/** Dispositif de sauvegarde, selon au moins l'une des revendications 1 et 2, caractérisé en ce que le signal de sauvegarde (HS) destiné à être fourni à la place dudit premier signal est choisi pour n'être que partiellement substituable à ce premier signal, de manière à permettre d'éviter un endommagement d'organe(s) d'agencement entraîné par une absence de signal, sans être fonctionnellement suffisant pour permettre un fonctionnement normal de l'agencement.

**4/** Dispositif de sauvegarde, selon la revendication 1, caractérisé en ce qu'il est muni de moyens de détermination comportant une bascule (15') recevant le premier signal sur une entrée d'horloge (clk) et le signal de sauvegarde simultanément sur une entrée de données (d) et sur une entrée de mise à un (m1), ainsi qu'un diviseur (16') apte à produire le signal de sauvegarde à partir du signal d'échantillonnage et recevant par ailleurs, sur une entrée de remise à zéro, un signal binaire produit par un générateur d'impulsions (17') à partir des transitions du premier signal.
